# EUROPEAN PATENT APPLICATION

(11) **EP 1 970 574 A2**
(43) Date of publication of application: **17.09.2008**
(21) Application number: 08250698.1
(22) Date of filing: 29.02.2008
(51) Int. Cl.: F16B 5/02

(54) **Fastening device**

(30) Priority: 14.03.2007 JP 2007065085
(71) Applicant: AOYAMA SEISAKUSHO CO., LTD., Nagoya-shi, Aichi 466-0825 (JP)
(72) Inventor: Ito, Shuji, Niwa-gun, Aichi 480-0198 (JP); Hasegawa, Sadayoshi, Niwa-gun, Aichi 480-0198 (JP)
(74) Representative: Paget, Hugh Charles Edward

(57) **Abstract**

A fastening device, including: a sleeve 20 fixed to a first member 40; a bolt 1; and a movable spacer 10 that is engaged with a male screw portion 4 of the bolt 1 to be detachable upon receiving a transmission torque exceeding a predetermined value, and moves to a position coming into contact with a second member 50 distanced from the first member 40 as a result of rotating while mating with the reversal screw portion 22 of the sleeve 20 upon receiving the rotational torque from the bolt 1. On the inner peripheral surface of the movable spacer 10, an elastic body layer 15 which elastically deforms when engaged with the male screw portion 4 of the bolt 1 to exhibit a torque transmitting function and a pitch deviation absorbing function is formed.

## Description

### BACKGROUND OF THE INVENTION

### FIELD OF THE INVENTION

The present invention relates to a fastening device for use in fixing two separated members while keeping them spaced at their mutual distance.

### DESCRIPTION OF THE PRIOR ART

Conventionally, in a technical field of automobiles and the like, a fastening device for fixing two separated members to each other while keeping them spaced at their mutual distance has been suggested. For example, Patent Documents 1, 2, and 3 listed below respectively disclose a fastening device, including a sleeve fixed to a first member which is one of two separated members by welding, a movable spacer that is screwed to the sleeve by a reversal screw, and a bolt formed with a male screw portion at the top end of its shaft portion that is capable of mating with the female screw portion formed on the movable spacer. The male screw portion of the bolt and the movable spacer are engaged with each other in such a manner that they can be detached from each other when a transmission torque exceeding a predetermined value is applied thereto.

These fastening devices have a function of fastening the first member and the second member to each other while keeping them spaced at their mutual distance in the following manner. That is, the bolt inserted into the movable spacer from the second member is rotated to transmit a torque to the movable spacer so as to move the movable spacer toward the second member by a function of the reversal screw. After the movable spacer has come into contact with the secondmember, the male screw portion of the bolt is detached from the movable spacer, and then, the male screw portion of the bolt is screwed to the female screw portion formed on the first member, thereby fixing the first member and the second member to each other while keeping them spaced at their mutual distance.

However, these conventional fastening devices are inevitably required to have a structure where the male screw portion of the bolt must be short in length, so that it can be screwed to the female screw portion of the first member only after once being detached from the female screw portion of the movable spacer. This is for the reason that, if the male screw portion of the bolt is long in length and is screwed to both the female screw portion of the movable spacer and the female screw portion of the first member simultaneously, there is high possibility that a pitch deviation occurs between these female screw portions, and their threads are damaged or tightening becomes impossible. To prevent such troubles, it is conventionally required to form the male screw portion of the bolt to be short in length.

However, if the length of a male screw portion of a bolt is reduced, the range of applicable plate thickness is narrowed. In this case, for example, it is required to distinguish the use of various bolts having various below-neck lengths for every vehicle model, and as a result, it is required to produce many kinds of bolts having various below-neck lengths. This results in the increase in the kinds of bolts and becomes a hindrance to the cost reduction.
[Patent Document 1] Japanese Laid-Open Patent Publication No. 2002-347656
[Patent Document 2] Japanese Patent National Publication of Translated Version No. 2004-505218
[Patent Document 3] Japanese Laid-Open Patent Publication No. 2005-61613

### SUMMARY OF THE INVENTION

An objective of the present invention is to solve the problems of the prior arts described above, and to provide a fastening device which includes a bolt having a male screw portion long in length but is free from any troubles caused by a pitch deviation, and is capable of securely tightening two members spaced from each other at various distances using such bolts having a unified below-neck length and a unified male screw portion length.

To achieve the objective described above, a fastening device of the present invention is characterized in including: a sleeve formed with a reversal screw portion on its inner or outer peripheral surface and fixed to a first member; a bolt formed with a male screw portion at a top end side of its shaft portion; and a movable spacer that is engaged with a male screw portion of the bolt to be detachable upon receiving a transmission torque exceeding a predetermined value, and rotates as being screwed to the reversal screw portion of said sleeve upon receiving a rotational torque from the bolt so as to move to a position coming into contact with a second member spaced from the first member, wherein, on the inner peripheral surface of the movable spacer, an elastic body layer which elastically deforms when engaged with the male screw portion of the bolt so as to exhibit a torque transmitting function and a pitch deviation absorbing function is formed.

It is preferable that the elastic body layer on the inner peripheral surface of the movable spacer is made of synthetic resin or synthetic rubber such as elastomer, polyamide (tradename: Nylon), polypropylene (PP) and the like, which has elasticity as well as is capable of receiving the male screw portion of the bolt screwed therein, and also is capable of transmitting a torque. Further, the elastic body layer on the inner peripheral surface of the movable spacer may include a female screw portion capable of mating with the male screw portion of the bolt. Alternatively, a female screw portion may be formed on the elastic body layer on the inner peripheral surface of the movable spacer as a result that the bolt is passed therethrough. Still alternatively, the elastic body layer on the inner peripheral surface of the movable spacer may be divided into plural sections in the circumferential direction. Still alternatively, a stopper for preventing the movable spacer from rotating may be protruded from the upper surface of the sleeve.

The fastening device of the present invention is for use in fastening a first member and a second member separated from each other while keeping them spaced at their mutual distance. In use, as in the conventional cases, the male screw portion of the bolt is screwed to the inner peripheral surface of the movable spacer to transmit the torque to the movable spacer so that the movable spacer is rotated. Then, as a result of the reversal screw function between the sleeve and the movable spacer, the movable spacer is moved to a position where it comes into contact with the second member. When reached this state, the movable spacer cannot rotate any more. Thus, the male screw portion of the bolt detaches from the movable.spacer and further advances to be screwed to the first member, resulting in fixing the first member to the second member.

However, in the fastening device according to the present invention, an elastic body layer is formed on the inner peripheral surface of a movable spacer. The elastic body layer exhibits a torque transmitting function as well as a pitch deviation absorbing function simultaneously when the male screw portion of the bolt is screwed therein. Owing to this elastic body layer, no pitch deviation occurs even if the male screw portion of the bolt is screwed to the elastic body layer of the movable spacer and the first member simultaneously. For this reason, unlike the conventional cases, the male screw portion of the bolt is not required to be short in length. Thus, the male screw portion of the bolt can be formed to be long in length, and this bolt having the unified male screw portion length is applicable to tightening the first member and the second member to each other not only in the case where the distance between the first member and the second member is long as a matter of course, but also in the case where the distance is short. As a result, there is no need of producing many kinds of bolts having various below-neck lengths, and cost reduction can be achieved.

Further, as is recited in claim 2, when the elastic body layer on the inner peripheral surface of the movable spacer is made of synthetic resin or synthetic rubber such as elastomer, polyamide, polypropylene (PP) and the like, which has elasticity as well as is capable of receiving the male screw portion of the bolt screwed therein, and also is capable of transmitting a torque, the torque transmitting function and the pitch deviation absorbing function can be easily imparted to the elastic body layer.

Further, as is recited in claim 5, when the elastic body layer on the inner peripheral surface of the movable spacer is divided into plural sections in the circumferential direction, the torque transmitting force and the pitch deviation absorbing force can be adjusted more finely. Further, as is recited in claim 6, when a stopper for preventing the movable spacer from rotating is protruded from the upper surface of the sleeve, the movable spacer is prevented from rotating to slip off due to the vibration generated during the transportation.

### BRIEF DESCRIPTION OF THE DRAWINGS

Fig. 1 is a perspective view showing a fastening device of a first embodiment in an exploded state.
Fig. 2 is a cross-sectional view showing a state during transportation where a movable spacer and a sleeve are screwed to each other.
Fig. 3 is a plan view showing a state during transportation where the movable spacer and the sleeve are screwed to each other.
Fig. 4 is a plan view of the movable spacer.
Fig. 5 is a partially cut-away frontal view of the movable spacer.
Fig. 6 is a cross-sectional view showing an initial stage of tightening by a fastening device of a first embodiment.
Fig. 7 is a cross-sectional view showing a state where the movable spacer moves as the bolt rotates.
Fig. 8 is a cross-sectional view showing a state where the movable spacer is in contact with the second member.
Fig. 9 is a cross-sectional view showing a state where the male screw portion of the bolt is completely screwed with the female screw portion of the movable spacer and the female screw portion of the nut.
Fig. 10 is a cross-sectional view showing the state where the tightening is completed.
Fig. 11 is an exploded cross-sectional view of a fastening device of a second embodiment.

### DETAILED DESCRIPTION OF THE INVENTION

### (First Embodiment)

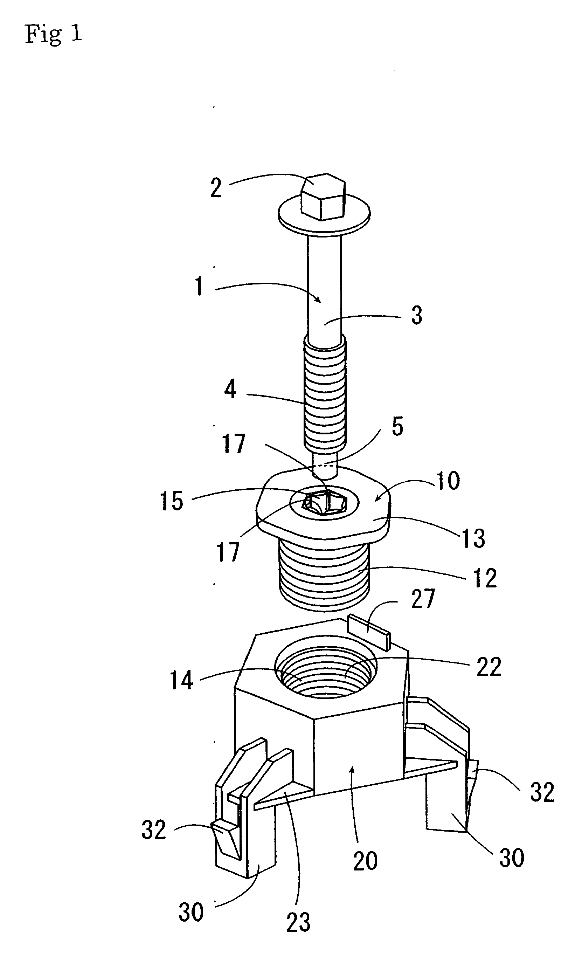

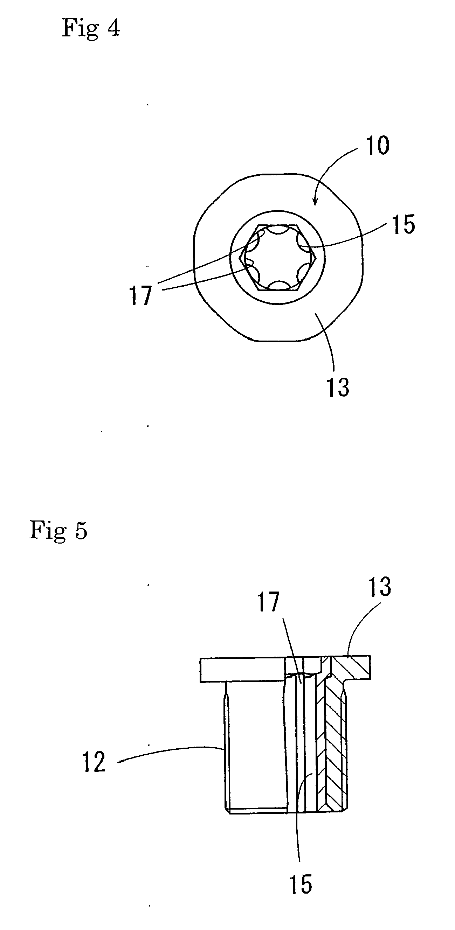

Figs. 1 to 10 respectively show a first embodiment of the present invention. A fastening device of this embodiment is comprised of a metallic bolt 1, a metallic movable spacer 10, a sleeve 20, and a metallic nut 31. A first member 40 is formed with a bolt inserting hole 42, and the metallic nut 31 is welded to the back surface of the first member 40. The bolt 1 is comprised of a head portion 2, a columnar shaft portion 3, and a male screw portion 4 which is a positive screw formed at the top end side of the columnar shaft portion 3. As will be described later, the bolt 1 is screwed into the movable spacer 10. At the top end side of the male screw portion 4, a stick top portion 5 having a diameter smaller than the root diameter of the male screw portion 4 is formed, for making it easy to insert and screw into female screw portions of the movable spacer 10 and the nut 31.

The sleeve 20 is fixed to the surface of the bolt inserting hole 42 of the first member 40. The sleeve 20 integrally encapsulates a metallic nut 14 in its hexagonal resin molded pillar body by insert-molding. At the bottom ends of the side surfaces of the hexagonal pillar body of the sleeve 20 adjacent to each other at 120° intervals, a plate-like portion 23 in a substantially triangular shape is provided, respectively. From the undersides of these plate-like portions 23, three pieces of clips 30 to be inserted into the through hole 41 of the first member 40 are protruded. Each clip 30 is formed with a craw 32 for preventing slipping off, and these craws 32 serve to fix the sleeve 20 to the surface of the bolt inserting hole 42 of the first member 40.

On the inner peripheral surface of the nut 14, a female screw port ion 22 consisting of a reversal screw which is capable of mating with the male screw portion 12 formed on the outer peripheral surface of the movable spacer 10 is formed. Further, from the upper surface of the sleeve 20, a rotation preventing stopper 27 is protruded. This is a stopper elastically engages with the rectangular head portion of the movable spacer 10, in order to prevent the movable spacer 10 from rotating and loosening to slip from the sleeve 20 due to the vibration and the like generated during when the fastening device is transported with the movable spacer 10 inserted and screwed into the sleeve 20.

The movable spacer 10 is comprised of a cylindrical portion 11 and a plate-like portion 13 in a substantially hexagonal shape extending outward from the outer peripheral edge at one end portion of the cylindrical portion 11. On the outer peripheral surface of the cylindrical portion 11, a male screw portion 12 which is a reversal screw is formed. The movable spacer 10 is mounted to the sleeve 20 in a state where the male screw portion 12 thereof is screwed to the female screw portion 22 consisting of a reversal screw formed on the nut 14 of the sleeve 20.

The substantially hexagonal plate-like portion 13 of the movable spacer 10 serves as a portion for locking and holding a tool such as a spanner that is used in tightening and loosing the movable spacer 10 to and from the sleeve 20. Further, the hexagonal hole drilled in the plate-like portion 13 of the movable spacer 10 serves as a portion for locking and holding a tool such as a hexagonal wrench that is used in tightening and loosening the movable spacer 10 to and from the sleeve 20. These locking and holding portions are not limited to the substantially hexagonal plate-like portion 13 and the hexagonal hole, but alternatively may be properly created; for example, a hole for locking a dedicated tool is drilled in the plate-like portion 1.

On the inner peripheral surface of the movable spacer 10, an elastic body layer 15 is formed over the total length of the movable spacer 10. The elastic body layer 15 exhibits a torque transmitting function and a pitch deviation absorbing function at the time when the male screw portion 4 of the bolt 1 is inserted therein. The elastic body layer 15 is made of a material different from that of the main body of the movable spacer 10. Specifically, it is made of resin or synthetic rubber such as elastomer, polyamide (tradename: Nylon), polypropylene (PP) resin and the like, which has elasticity as well as is capable of receiving the male screw portion 4 inserted and screwed therein, and is also capable of exhibiting the torque transmitting function and the pitch deviation absorbing function for the bolt 1.

The torque transmitting function is a function of transmitting the rotational torque of the bolt 1 to the movable spacer 10 utilizing the frictional force generated in the elastic body layer 15. The pitch deviation absorbing function is a function of absorbing a pitch deviation that occurs when the male screw portion 4 of the bolt 1 is screwed to the inner peripheral surface of the elastic body layer 15 of the movable spacer 10 and the metallic nut 31 simultaneously, by deforming the elastic body layer 15. On the inner peripheral surface of the elastic body layer 15, recesses and protrusions are formed into the shape of spiral as a result that the male screw portion 4 of the bolt 1 is threaded into the elastic body layer 15. Needless to say, a female screw portion for receiving a male screw portion 4 inserted and screwed therein may be formed in advance on the inner peripheral surface of the elastic body layer 15.

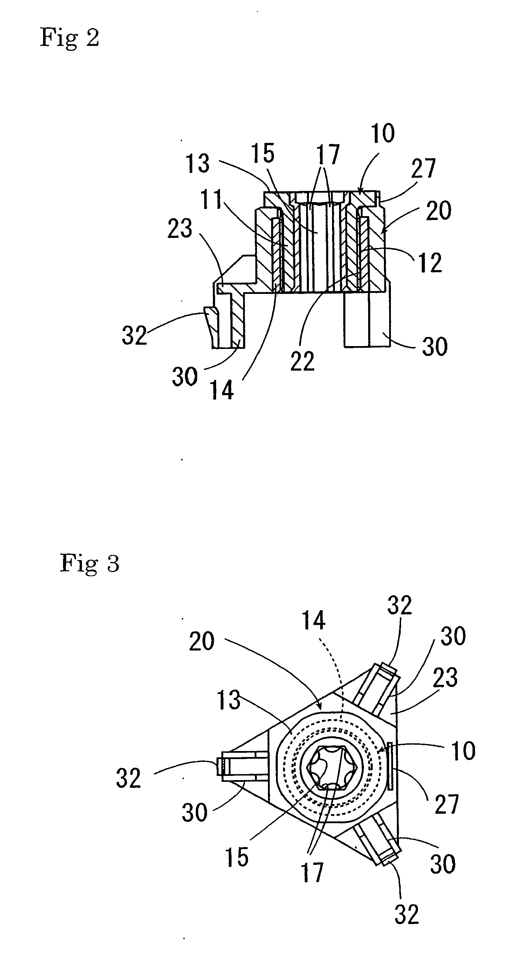

In this embodiment, as shown in Figs. 1 and 3, the inner peripheral surface of the movable spacer 10, that is, the elastic body layer 15 is divided along the circumferential direction into plural sections, each having a semi-cylindrical shape in cross section, via notches 17 extending in the axial direction, so that the elasticity and the frictional force which the material uniquely has can be set in more detail. Contrarily, an alternative shape may be properly selected, depending on the use conditions and the like.

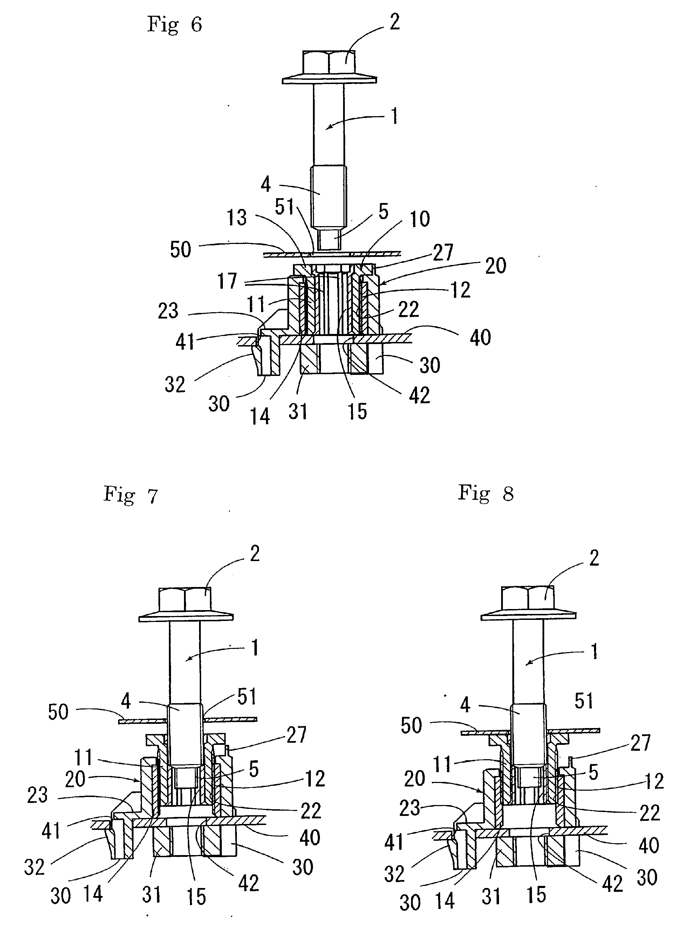

Next, a method for fixing the first member 40 and the second member 50 to each other while keeping them spaced at their mutual distance using the fastening device described above will be described referring to Figs. 6 to 10. The first member 40 is, for example, a side plate of an automobile, and the second member 50 is, for example, a front pillar of the automobile. Further, the male screw portion 4 of the bolt 1 has a length longer than the distance between the nut 31 welded to the first member 40 and the movable spacer 10 brought into contact with the second member 50.

As shown in Fig. 6, first of all, the sleeve 20 is mounted to the first member 40 via the clip 30. Specifically, the clip 30 of the sleeve 20 is fittedly inserted into the through hole 41 drilled in the first member 40 and locked therein, so that the clip 30 and the first member 40 are fixed to each other. In the initial state, the movable spacer 10 is completely screwed into the nut 14 of the sleeve 20 until the plate-like portion 13 of the movable spacer 10 comes into contact with the upper end of the sleeve 20.

Subsequently, the bolt 1 is inserted into the through hole 51 drilled in the second member 50. Then, as shown in Fig. 7, the male screw portion 4 of the bolt 1 is inserted into the inner peripheral surface of the movable spacer 10, and the bolt 1 is screwed in the positive screwing direction (i.e. in the clockwise direction). This causes a frictional force between the elastic body layer 15 of the movable spacer 10 that has the torque transmitting function and the pitch deviation absorbing function, and the male screw portion 4 of the bolt 1, so that the rotational torque of the bolt 1 is transmitted to the movable spacer 10. Thus, the bolt 1 and the movable spacer 10 integrally rotate in the positive direction.

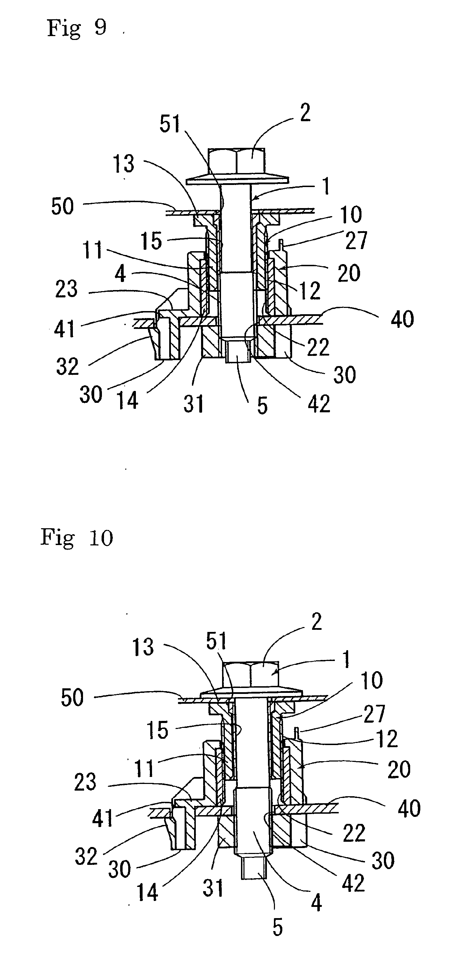

As a result of this rotation of the movable spacer 10, the movable spacer 10, screwed into the nut 14 of the sleeve 20 via the reversal screw, continues to move until its plate-like portion 13 comes into contact with the second member 50 as shown in Fig. 8. When reached the position shown in Fig. 8, the movable spacer 10 cannot rotate any more. In this state, a torque is further applied to the bolt 1, so that the bolt 1 separates from the movable space 10 and advances while rotating independently. As a result, as shown in Fig. 9, the male screw portion 4 of the bolt 1 comes to be screwed into the nut 31 welded to the first member 40. At this time, the male screw portion 4 of the bolt 1 is in a state of being screwed to the female screw portion formed on the inner peripheral surface of the elastic body layer 15. The pitch deviation is absorbed by the pitch deviation function of the elastic body layer 15, that is, by the elastic deformation of the elastic body layer 15. Thus, even if there is a pitch deviation between the male screw portion 4 of the bolt 1 and the female screw portion of the nut 31, the male screw portion 4 can be screwed into the female portion without any problem.

Specifically, as far as any pitch of the top end, even if it is a minimal pitch, of the male screw portion 4 of the bolt 1 can be inserted and screwed to the pitch of the female screw portion of the metallic nut 31, the elastic body layer 15 elastically deforms to automatically match the pitch between the male screw portion 4 of the bolt 1 and the nut 31. Then, as shown in Fig. 10, the male screw portion 4 of the bolt 1 further advances and is screwed and fixed only to the nut 31 welded to the first member 40, so that the first member 40 can be firmly mounted while being kept spaced from the second member 50 at a certain distance.

As described above, in the fastening device of the present invention, the elastic body layer 15 which exhibits the torque transmitting function and the pitch deviation absorbing function at the time when the movable spacer 10 is engaged with the male screw portion 4 of the bolt 1 is formed on the inner peripheral surface of the movable spacer 10. Therefore, regardless of the presence or absence of the pitch deviation between the inner peripheral surface of the movable spacer 10 and the female screw portion of the nut 31, the bolt 1 can be accurately screwed into the female screw portion of the nut 31. Owing to this arrangement, no problem arises even if the distance between the first member 50 and the second member 40 is short and the length of the male screw portion 4 of the bolt 1 is longer than the distance between the lower end of the movable spacer 10 and the upper end of the nut 31. As a matter of course, even in the case where the distance between the first member 50 and the second member 40 is long, they can be fixed to each other using the bolt 1 having the below-neck length same as above.

### (Second Embodiment)

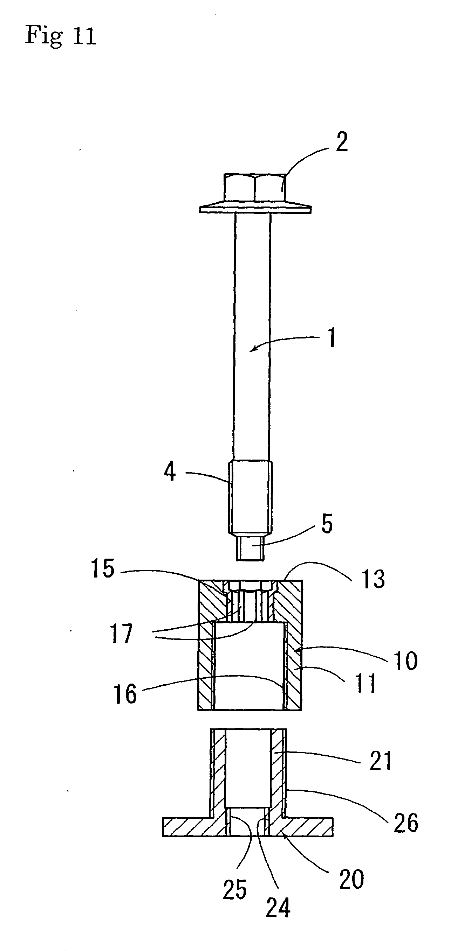

In the first embodiment described above, the movable spacer 10 and the sleeve 20 are screwed with each other in a state where the movable spacer 10 is housed in the sleeve 20. In a second embodiment shown in Fig. 11, the movable spacer 10 is formed to have a diameter larger than the diameter of the sleeve 20, so that the movable spacer 10 and the sleeve 20 are screwed with each other in a state where the sleeve 20 is housed in the movable spacer 10.

The movable spacer 20 is comprised of a cylindrical portion 11, and a plate-like portion 13 provided to close an opening portion located at one side of the cylindrical portion 11. On the inner peripheral surface of the cylindrical portion 11, a female screw portion 16 of a reversal screw is formed. On the inner peripheral surface of the center hole drilled in the plate-like portion 13, an elastic body layer 15 is formed. As in the first embodiment, the elastic body layer 15 is made of synthetic resin or synthetic rubber such as elastomer, polyamide (tradename: Nylon), polypropylene (PP) and the like, and has a torque transmitting function and a pitch deviation absorbing function.

Further, the sleeve 20 has an outer diameter substantially equal to the inner diameter of the cylindrical portion 11 of the movable spacer 10, and includes a cylindrical portion 21 slightly longer than the cylindrical portion 11. On the outer peripheral surface of the cylindrical portion 21, a male screw portion 26 comprised of a reversal screw capable of mating with the female screw portion 16 comprised of a reversal screw formed on the inner peripheral surface of the cylindrical portion 11 of the movable spacer 10 is formed. At the center portion of the cylindrical portion 21, a screw hole 24 having a diameter still smaller than the inner diameter of the cylindrical portion 21 is drilled. In the screw hole 24, a female screw portion 25 capable of mating with the male screw portion 4 of the bolt 1 is formed. This female screw portion 25 has a normal threaded shape corresponding to the male screw portion 4 of the bolt 1.

In the fastening device of this second embodiment, the sleeve 20 is fixed to an unillustrated first member, and the bolt 1 is screwed to the elastic body layer 15 of the movable spacer 10 screwed by its reversal screw to the sleeve 20. In this manner, the rotational torque of the bolt 1 is given to the movable spacer 10 to rotate the movable spacer 10. As the movable spacer 10 rotates, as in the first embodiment described above, the bolt 1 and the movable spacer 10 are integrally retracted. When the movable spacer 10 comes into contact with the second member 2 and stops, due to the rotational torque exceeding the frictional force, the bolt 1 advances along the rotation in the positive direction, and the male screw portion 4 of the bolt 1 is screwed to the female screw portion 25 of the sleeve 20. As a result, the first member can be firmly mounted while being kept spaced from the second member at a certain distance. As in the manner described above, the female screw portion of the first member may be formed on the sleeve 20.

As described above, according to the present invention, although the bolt is formed with a male screw portion long in length, no trouble occurs by a pitch deviation, and two members spaced from each other at various distances can be securely tightened to each other using such bolts having a unified below-neck length and a unified male screw portion length. Owing to this structure, unlike the conventional cases, there is no need of manufacturing many kinds of bolts having various below-neck lengths. Thus, there is an advantage that cost reduction can be achieved by the reduction in the kinds of parts.

## Claims

1. A fastening device, comprising: a sleeve formed with a reversal screw portion on its inner or outer peripheral surface and fixed to a first member; a bolt formed with a male screw portion at a top end side of its shaft portion; and a movable spacer that is engaged with a male screw portion of the bolt to be detachable upon receiving a transmission torque exceeding a predetermined value, and rotates as being screwed to the reversal screw portion of said sleeve upon receiving a rotational torque from the bolt so as to move to a position coming into contact with a second member spaced from the first member, wherein an elastic body layer is formed on the inner peripheral surface of the movable spacer.

2. A fastening device according to claim 1, wherein the elastic body layer on the inner peripheral surface of the movable spacer is made of synthetic resin or synthetic rubber.

3. A fastening device according to claim 1 or 2, wherein the elastic body layer on the inner peripheral surface of the movable spacer includes a female screw portion that is screwed to the male screw portion of the bolt.

4. A fastening device according to claim 1 or 2, wherein the bolt is passed through the elastic body layer on the inner peripheral surface of the movable spacer to constitute a female screw portion.

5. A fastening device according to any one of claims 1 to 3, wherein the elastic body layer on the inner peripheral surface of the movable spacer is divided into plural sections in a circumferential direction.

6. A fastening device according to claim 1, wherein a stopper for preventing the movable spacer from rotating is protruded from the upper surface of the sleeve.
